# EUROPEAN PATENT SPECIFICATION

(11) **EP 1 650 586 B1**
(45) Date of publication and mention of the grant of the patent: **19.03.2008**
(21) Application number: 04257984.7
(22) Date of filing: 21.12.2004
(51) Int. Cl.: G01W 1/10

(54) **Weather station**
Wetterstation
Station météorologique

(30) Priority: 20.10.2004 US 968054
(43) Date of publication of application: 26.04.2006
(73) Proprietor: IDT Technology Limited, Kowloon, Hong Kong SAR (CN)
(72) Inventor: Chan, Raymond, 9th Floor, Hunghom Kowloon Hong Kong SAR (CN)
(74) Representative: Martin, David John

(56) References cited:
- EP-A- 0 513 420
- EP-A- 1 538 464
- GB-A- 2 119 835
- US-A- 5 995 862
- US-A- 6 031 579

## Description

The present invention relates to a weather station for indicating weather conditions.

### BACKGROUND OF THE INVENTION

Weather stations (or monitors) for indicating weather conditions are generally known, which may incorporate other functions or be included as part or a function of an equipment of another type and in particular a clock. Weather conditions, such as temperature and weather forecast, are typically indicated by the measured values or pertinent symbols on an LCD display. These manners of indication are sometimes found to be not practical or inadequate.

EP-A-1 538 464, published on 08.06.2005, discloses a weather sensing station which includes one or more remote wireless sense units for sensing environmental conditions. A base station processes wireless signals from the wireless sense units and vindicates the environmental conditions. A running display string may be used to display the data on a display string of the base station. Wireless sense units may include an air quality sense unit and, for example, a UV sensor. Air quality information and UV energy information may then be determined and displayed as data or indicated through graphical symbols.

EP-A-0 513 420 discloses a weather warning device in which electronic measuring devices are used to measure quantities which are decisively involved in weather formation. It has a computer, an electronic clock, a memory and a display device. A part of the computer is constructed as an algorithm-formning means . It can be used to derive from measured values and tendencies of the measured values weather forecasts. The weather warning device is used in shipping and aeronautics, in tourism and in agriculture.

US-A-5 995 862 discloses a SYSTEM FOR MONITORING ULTRAVIOLET RADIATION WITH ASSOCIATED CHECKING OF THE CHARACTERISTICS OF THE SKIN FOR THE ADMINISTRATION OF PROTECTIVE CREAMS. The system comprises in combination: a) at least one station for detecting the irradiation conditions; b) at least one connection means from said detection station to a user terminal ; c) at least one detection device for detecting the characteristics of the epidermis of the person who is to be exposed to the ultraviolet radiation; d) correlation means in said user terminal for correlating the irradiation conditions to the characteristics of the epidermis of the person and to the protection factor of any skin-protecting preparations used by the person or to the radiation exposure time, said correlation means indicating the exposure time or the protection factor as a function of the remaining correlate parameters.

The invention seeks to obviate or at least alleviate such shortcoming by providing a new or improved weather station.

### SUMMARY OF THE INVENTION

According to the invention, there is provided a weather station for measuring and indicating weather conditions, comprising a casing having a display and an electronic operating circuit in the casing for operation. The operating circuit comprises at least one sensor for sensing an atmospheric parameter, a memory for storing at least one literal weather message pertinent to the atmospheric parameter, and a control unit for determining degree of the atmospheric parameter sensed by the sensor and retrieving a said weather message corresponding to the degree and then displaying the weather message on the display. The or each weather message has a content that indicates a probable weather phenomenon and a probable effect on person and/or an action recommended to a person.

Preferably, the control unit is adapted to display the weather message on the display in a dynamic manner.

More preferably, the display extends horizontally and the control unit is adapted to display the weather message scrolling along the display.

Advantageously, the display comprises a dot matrix display.

It is preferred that the memory stores a plurality of literal weather messages corresponding to variations of the atmospheric parameter for display on the display under the control of the control unit according to the corresponding variations as determined.

Preferably, the memory stores a plurality of literal weather messages of different types comprising heat index, UV index and weather forecast.

More preferably, the message types include freeze, ice and fog alerts.

It is preferred that the atmospheric parameter comprises temperature expressed as heat index having a series of variations, and the memory stores a plurality of literal weather messages corresponding to the variations, having contents indicating probable effects on a person, for display on the display under the control of the control unit according to the corresponding variations as determined.

It is preferred that the atmospheric parameter comprises UV solar radiation expressed as UV index having a series of variations, and the memory stores a plurality of literal weather messages corresponding to the variations, having contents indicating actions recommended to a person, for display on the display under the control of the control unit according to the corresponding variations as determined.

It is preferred that the atmospheric parameter comprises pressure trend expressed as weather forecast having a series of variations, and the memory stores a plurality of literal weather messages corresponding to the variations, having contents indicating probable weather phenomena, for display on the display under the control of the control unit according to the corresponding variations as determined.

It is preferred that the atmospheric parameter comprises temperature and humidity expressed as one of freeze, ice and fog alerts, and the memory stores a corresponding literal weather message, having a content indicating one of action recommended to a person and probable weather phenomenon, for display on the display under the control of the control unit according to the temperature and humidity as determined.

Preferably, the memory stores a plurality of literal weather messages of different types, and the control unit is programmed to display the weather messages on the display sequentially according to their types in a predetermined order.

More preferably, the control unit is programmed to display the weather messages repeatedly and continuously, and a key of the operating circuit is operable to reset the display to restart from a weather message of a warning nature.

Advantageously, the control unit is programmed to display the weather message or messages on the display repeatedly and continuously for reading at any time.

### BRIEF DESCRIPTION OF DRAWINGS

The invention will now be more particularly described, by way of example only, with reference to the accompanying drawings, in which:

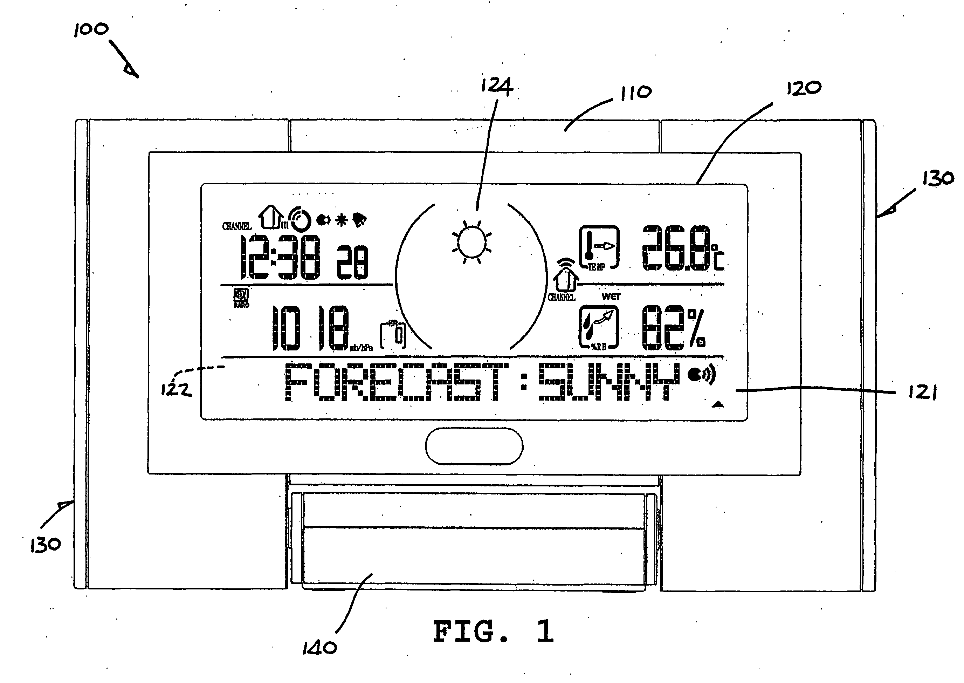

Figure 1 is a front elevational view of an embodiment of a weather station in accordance with the invention, said station having a display;
Figure 2 is a left side elevational view of the weather station of Figure 1;
Figure 3 is a schematic view of a series of messages displayed on the display of Figure 1; and
Figure 4 is a schematic functional block diagram of an operating circuit of the weather station of Figure 1.

### DETAILED DESCRIPTION OF PREFERRED EMBODIMENT

Referring to the drawings, there is shown a desktop weather station 100 embodying the invention, which comprises a flat rectangular casing 110 having an LCD display 120, nine function keys 130 on opposite left and right sides thereof including a message key 131, and a snooze/light button 140 on a stand below the display 120. The bottom part of the display 120 is manufactured as an oblong dot matrix display 121 which extends horizontally and is dedicated to display of weather messages.

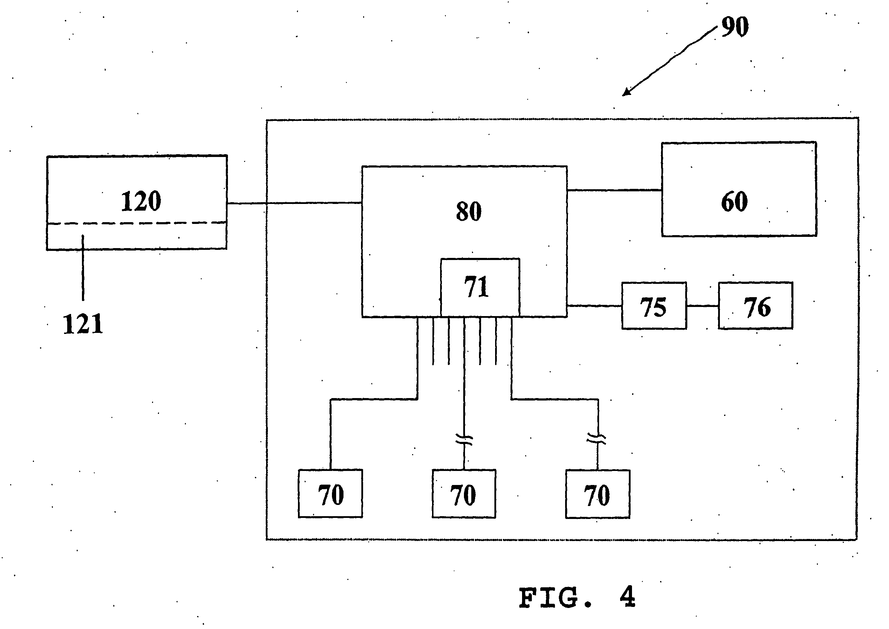

An electronic operating circuit 90 (Figure 4) in the casing 110 measures various atmospheric parameters for indicating weather conditions and provides time/calendar information on the display 120. Such atmospheric parameters comprise barometric pressure, temperature and humidity and weather forecast is also included, all of which are collectively referred to as weather conditions.

The operating circuit 90 includes a control unit built based upon a microprocessor 80 to perform various weather and clock functions. For weather functions, the microprocessor 80 is programmed and calibrated to process various weather input signals and perform relevant computations and then provide appropriate outputs for display on the display 120 in various modes. For clock functions, a built-in radio-controlled clock module 75 of the operating circuit 90 provides time and calendar information as well as an alarm. There is also included a radio-frequency (RF) clock sensor 76 for automatic synchronization with the RF time and calendar signals broadcast by the local authority of the country or time zone concerned for official time synchronization.

The operating circuit 90 includes a plurality of sensors 70 for sensing the various weather parameters, such as temperature, pressure and humidity in particular. Some of these sensors 70 are wired within the station casing 110 for indoor measurement of temperature for example, whilst the others are remote thermo-hygro sensors 70 placed at suitable outdoor locations for measuring temperature and humidity. A receiver 71 of the operating circuit 90 provides up to five RF communication channels for receiving input signals from respective remote sensors 70, whose transmitters are tuned to the right channels.

Indoor temperature is measurable in the range from -5°C to +50.0°C (23°F to 122.0°F) and outdoor (remote) temperature from -20.0°C to +60.0°C (-4.0°F to +140.0°F). Both indoor and outdoor humidity can be measured in the range from 25% to 95%.

Barometric pressure can be measured and displayed numerically in mb/hPa or inHg as selected by a user. Altitude adjustment is built-in for automatic atmospheric pressure compensation from -100m to 2500m.

It is known that the trend of change in atmospheric pressure provides a reasonably reliable basis for ascertaining the current weather condition and predicting the forthcoming weather condition. Intensive research and analysis including statistical studies on this topic have been conducted, and various algorithms derived for use in weather forecast. In this regard, the microprocessor 80 is programmed based on an appropriate algorithm to identify five variations of weather forecast conditions, namely Sunny, Partly Cloudy, Cloudy, Rainy and Snowy, and to indicate them using respective sun/moon, cloud, rain and snow kinetic icons 124 on the display 120.

The first four conditions are determined primarily according to the variations in atmospheric pressure as measured by the relevant sensor 70 every fifteen minutes over a certain past period of time for at least several hours. Such pressure variations or trend includes, for example, the rate of rise or fall and the relative level as between the highest and lowest measurements. Identifying the SNOW condition also requires the use of rain and thermal sensors 70.

The weather station 100 is capable of displaying on the dot matrix display 121 weather messages in literal form pertinent to the atmospheric parameters or conditions, based on their degree, level or values, as measured by the sensors 70 and microprocessor 80. The word contents of the messages are stored in the microprocessor's internal registers or a ROM memory 60 as part of the operating circuit 90, for retrieval and display whenever appropriate.

There are six different types of weather messages: Heat Index, UV Index, Frost/Freeze, Ice Warning, Fog and Weather Forecast, and each type may include one or more messages, whose definition and content are set out in the following table:

| Message Type | Definition | Message Content |
|---|---|---|
| Heat Index | 26.7°C - 32.2°C (80°F - 90°F) | Possibility of heat exhaustion |
| | 32.2°C - 40.5°C (90°F - 105°F) | Strong heat - Possibility of dehydration |
| | 40.5°C - 54.4°C (105°F - 130°F) | Very strong heat - Heat exhaustion likely |
| | 54.4°C/130°F or greater | *Intense heat - Strong possibility of heat stroke* |
| UV Index | 0-2 | UV: Apply sunscreen |
| | 3-5 | UV: Wear protective clothing |
| | 6-7 | UV: Wear sunglasses & protective clothing |
| | 8-10 | UV: Avoid the sun between 10AM to 4PM |
| | >= 11 | *UV: Very strong rays stay indoors* |
| | UV down count time's up | *UV: Time is Up! (max. time of exposure to sun is up)* |
| Frost/Freeze | Dew point & current temp. <= 0°C/32°F | *Freeze Alert: Wrap pipes & cover your vegetation* |
| Ice Warning | -2°C to 3°C (28.4°F - 37.4°F) | *Ice Alert: possibility of black ice when driving* |
| Fog | Temperature - Dew point < -15°C/5°F | *Fog Alert: possibility of poor visibility when driving* |
| Weather Forecast | (Based on trend of variation in the atmospheric pressure) | Forecast: Sunny - Enjoy your day |
| | | Forecast: Partly cloudy |
| | | Forecast: Cloudy |
| | | Forecast: Rainy - Don't forget your umbrella |
| | | Forecast: Snowy |

Heat index in general is determined by temperature as the principal atmospheric parameter, supplemented by humidity that being a factor as it affects how environmental heat is felt by the skin. The present Heat Index message type has a series of four variations for hot conditions, which are defined primarily by respective ranges of temperature values. The memory 60 stores separate literal weather messages corresponding to these variations, each having a relevant content for display to foretell a probable harmful effect, i.e. heat exhaustion, hydration or stroke, on a person in the specific hot environmental condition concerned.

The ozone layer shields the Earth from harmful UV (ultraviolet) radiation emitted by the sun. Ozone depletion, as well as seasonal and weather conditions, cause different amounts of UV radiation to reach the Earth at any given time. UV index in general predicts the next day's ultraviolet radiation levels on a 1 to 11+ official scale.

The subject UV Index is divided into a series of five possible variations in UV radiation, which are defined according to rising levels of the official UV index, and one hostile state i.e. down count time's up state when the maximum time of exposure to the sun has expired. The memory 60 stores separate literal weather messages corresponding to these conditions, each having a related content for display to recommend a suitable protective action, i.e. wearing sunglasses, etc or avoiding the sun, on to a person in that sun condition.

Each of the types Frost/Freeze, Ice Warning and Fog has only one single message that represents an alert signal for a respective adverse state of condition determined based on the temperature and/or humidity (dew point) as set out. Upon reaching of this state, a corresponding literal weather message retrieved from the memory 60 will be displayed to recommend a precautionary action to take for Frost/Freeze or to suggest a specific weather phenomenon likely to meet for Ice Warning or Fog i.e. black ice or poor visibility respectively.

With regard to the message type on Weather Forecast, there are the five variations, i.e. Sunny, Partly Cloudy, Cloudy, Rainy and Snowy by name, defined based on the trends in atmospheric pressure. Corresponding literal weather messages stored in the memory 60 have content for display to predict the probable general weather phenomenon or condition by those names.

In general, a weather message will be displayed if, and for as long as, the criteria of the associated definition are met i.e. those atmospheric parameters are prevailing. The exceptions are the Weather Forecast and UV Index messages, which will always be exhibited as each set of messages covers all possible variations.

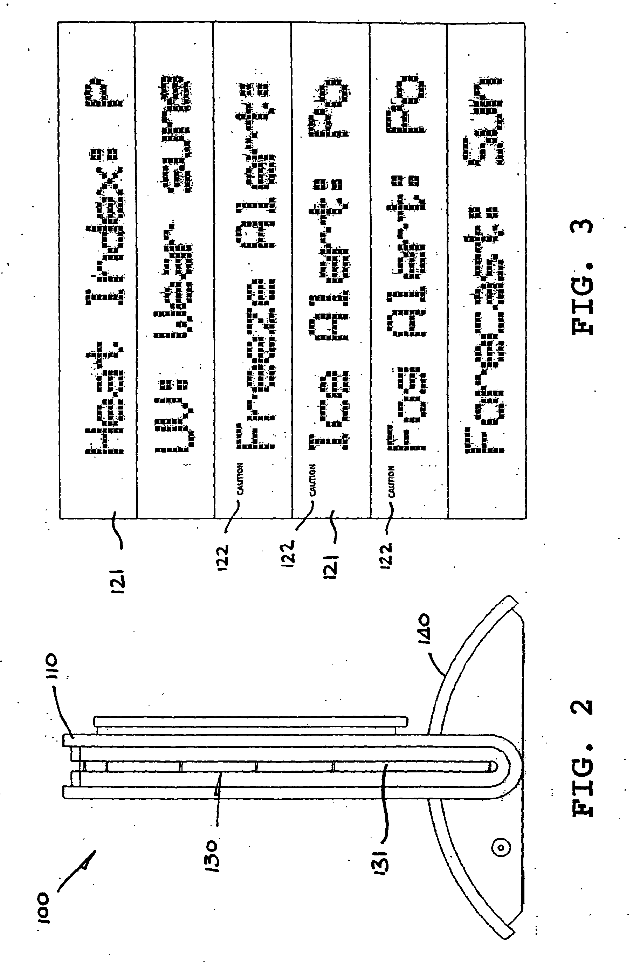

On the dot matrix display 121, each message will be displayed in a dynamic manner for prominence or to be eye-catching. This can be done in a number of ways, for example the message can be made to flash or be displayed on a blinking background or, as in the case of the described embodiment, the message is displayed as a single line sentence scrolling from right to left along the display 121, as depicted in Figure 3 which shows the start of every message content sentence.

The Heat Index and UV Index messages for the last two variations of either type and the message of each type Frost/Freeze, Ice Warning or Fog are classified by their nature as warning messages (shown in italic in the table), whilst the remainders are general message of the other kind. The warning messages are always accompanied by a stationary icon "CAUTION" 122 positioned at the upper left corner of the display 121 for enhanced conspicuousness.

The messages on show are normally displayed sequentially and repeatedly in the cyclic order according to their types: Warning (Frost/Freeze, Ice Warning and/or Fog) > Weather Forecast > Heat Index > UV Index > Warning, etc. As the messages are displayed continuously, they can be read at any time. Upon pressing of the message key 131, the cyclic display will be reset to restart from the warning messages and, upon repeated pressings, to scroll down to a specific message type as desired so that the message of that type can be read immediately.

The weather station 100 has a number of operation modes that can be entered or exited, or in general selected, using appropriate keys 130 as is generally known in the art. There are three principal operation modes namely clock/alarm, temperature/humidity and pressure/UV display modes, which can be switched to subsidiary modes for inter alia setting the clock/alarm or displaying further information e.g. temperature/humidity history and their maximum/minimum values or pressure/UV.

The invention has been given by way of example only, and various other modifications of and/or alterations to the described embodiment may be made by persons skilled in the art without departing from the scope of the invention as specified in the appended claims.

## Claims

1. A weather station (100) for measuring and indicating weather conditions, comprising:
a casing (110) having a display (120); and
an electronic operating circuit (90) in the casing (110) for operation, the operating circuit comprising:
at least one sensor (70) for sensing an atmospheric parameter,
a memory (60) for storing at least one literal weather message pertinent to the atmospheric parameter, and a control unit (80) for determining degree of the atmospheric parameter sensed by the sensor (70) and retrieving a said weather message corresponding to the degree and then displaying the weather message on the display (120), wherein the or each literal weather message has a content that indicates a probable weather phonemenon and a probable, effect on a person and/or an action recommended to a person.

2. The weather station as claimed in claim 1, wherein the control unit (80) is adapted to display the weather message on the display (120) in a dynamic manner.

3. The weather station as claimed in claim 2 wherein the display (120) extends horizontally and the control unit (80) is adapted to display the weather message scrolling along the display (120).

4. The weather station as claimed in any preceding claim, wherein the display (120) comprises a dot matrix display (121).

5. The weather station as claimed in any preceding claim, wherein the memory (60) stores a plurality of literal weather messages corresponding to variations of the atmospheric parameter for display on the display (120) under the control of the control unit (80) according to the corresponding variations as determined.

6. The weather station as claimed in any preceding claim, wherein the memory (60) stores a plurality of literal weather messages of different types comprising heat index, UV index and weather forecast.

7. The leather station as claimed in claim 6, wherein the message types include freeze, ice and fog alerts.

8. The weather station as claimed in any preceding claim, wherein the atmospheric parameter comprises temperature expressed as heat index having a series of variations, and the memory (60) stores a plurality of literal weather massages corresponding to the variations, having contents indicating probable effects on a person, for display on the display (120) under the control of the control unit (80) according to the corresponding variations as determined

9. The weather station as claimed in any preceding claim, wherein the atmospheric parameter comprises UV solar radiation expressed as UV index having a series of variations, and the memory (60) stores a plurality of literal weather messages corresponding to the variations, having contents indicating actions recommended to a person, for display on the display (120) under the control of the control unit (80) according to the corresponding variations as determined.

10. The weather station as claimed in any preceding claim, wherein the atmospheric parameter comprises pressure trend expressed as weather forecast having a series of variations, and the memory (60) stores a plurality of literal weather messages corresponding to the variations, having contents indicating probable weather phenomena, for display on the display (120) under the control of the control unit according to the corresponding variations as determined.

11. The weather station as claimed in any preceding claim, wherein the atmospheric parameter comprises temperature and humidity expressed as one of freeze, ice and fog alerts, and the memory (60) stores a corresponding literal weather message, having a content indicating one of action recommended to a person and probable weather phenomenon, for display on the display (120) under the control of the control unit (80) according to the temperature and humidity as determined.

12. The weather station as claimed in any preceding claim, wherein the memory (60) stores a plurality of literal weather messages of different types, and the control unit (80) is programmed to display the weather messages on the display (120) sequentially according to their types in a predetermined order

13. The weather station as claimed in claim 12, wherein the control unit is programmed to display the weather messages repeatedly and continuously, and a key (131) of the operating circuit (90) is operable to reset the display (120) to restart from a weather message of a warning nature.

14. The weather station as claimed in any preceding claim, wherein the control unit (80) is programmed to display the weather message or messages on the display (120) repeatedly and continuously for reading at any time.

## Patentansprüche

1. Wetterstation (100) zum Messen und Angeben von Wetterbedingungen, umfassend:
ein Gehäuse (110) mit einem Display (120); und
eine elektronische Betriebsschaltung (90) im Gehäuse (110) für den Betrieb, wobei die Betriebsschaltung umfasst:
mindestens einen Sensor (70) zum Abtasten eines atmosphärischen Parameters;
einen Speicher (60) zum Speichern von mindestens einer für den atmosphärischen Parameter relevanten literalen Wetternachricht; und
eine Steuereinheit (80), um den Grad des vom Sensor (70) abgetasteten atmosphärischen Parameters zu bestimmen und eine dem Grad entsprechende Wetternachricht abzurufen und dann die Wetternachricht auf dem Display (120) anzuzeigen, worin die oder jede literale Wetternachricht einen Inhalt hat, der ein wahrscheinliches Wetterphänomen und eine wahrscheinliche Wirkung auf eine Person und/oder eine einer Person empfohlene Maßnahme angibt.

2. Wetterstation nach Anspruch 1, worin die Steuereinheit (80) dazu angepasst ist, die Wetternachricht auf dem Display (120) auf eine dynamische Weise anzuzeigen.

3. Wetterstation nach Anspruch 2, worin das Display (120) horizontal verläuft und die Steuereinheit (80) dazu angepasst ist, die Wetternachricht auf dem Display (120) seitlich rollend anzuzeigen.

4. Wetterstation nach einem vorhergehenden Anspruch, worin das Display (120) eine Punktmatrixanzeige (121) umfasst.

5. Wetterstation nach einem vorhergehenden Anspruch, worin der Speicher (60) eine Vielzahl von den Variationen des atmosphärischen Parameters entsprechenden literalen Wetternachrichten zum Anzeigen auf dem Display (120) speichert, das von der Steuereinheit (80) gemäß den entsprechenden Variationen wie bestimmt gesteuert wird.

6. Wetterstation nach einem vorhergehenden Anspruch, worin der Speicher (60) eine Vielzahl von literalen Wetternachrichten verschiedener Typen speichert, die Wärmeindex, UV-Index und Wettervoraussage umfassen.

7. Wetterstation nach Anspruch 6, worin die Nachrichtentypen Frost-, Eis- und Nebelwarnungen enthalten.

8. Wetterstation nach einem vorhergehenden Anspruch, worin der atmosphärische Parameter Temperatur als Wärmeindex ausgedrückt umfasst, der eine Reihe von Variationen aufweist, und der Speicher (60) eine Vielzahl von den Variationen entsprechenden literalen Wetternachrichten mit einem Inhalt speichert, der wahrscheinliche Auswirkungen auf eine Person zur Anzeige auf dem Display (120) angibt, das von der Steuereinheit (80) gemäß den entsprechenden Variationen wie bestimmt gesteuert wird.

9. Wetterstation nach einem vorhergehenden Anspruch, worin der atmosphärische Parameter UV-Solarstrahlung umfasst, als UV-Index mit einer Reihe von Variationen ausgedrückt, und der Speicher (60) eine Vielzahl von den Variationen entsprechenden literalen Wetternachrichten mit einem Inhalt speichert, der die einer Person empfohlenen Maßnahmen zur Anzeige auf dem Display (120) angibt, das von der Steuereinheit (80) gemäß den entsprechenden Variationen wie bestimmt gesteuert wird.

10. Wetterstation nach einem vorhergehenden Anspruch, worin der atmosphärische Parameter einen Drucktrend umfasst, der als Wettervorhersage mit einer Reihe von Variationen ausgedrückt ist, und der Speicher (60) eine Vielzahl von den Variationen entsprechenden literalen Wetternachrichten mit einem Inhalt speichert, der wahrscheinliche Wetterphänomene zur Anzeige auf dem Display (120) angibt, das von der Steuereinheit gemäß den entsprechenden Variationen wie bestimmt gesteuert wird.

11. Wetterstation nach einem vorhergehenden Anspruch, worin der atmosphärische Parameter Temperatur und Humidität umfasst, die als eine von Frost-, Eis- und Nebelwarnungen ausgedrückt sind, und der Speicher (60) eine entsprechende literale Wetternachricht mit einem Inhalt speichert, der eins der Folgenden angibt: eine einer Person empfohlene Maßnahme und ein wahrscheinliches Wetterphänomen zur Anzeige auf dem Display (120), das von der Steuereinheit (80) gemäß der Temperatur und Humidität wie bestimmt gesteuert wird.

12. Wetterstation nach einem vorhergehenden Anspruch, worin der Speicher (60) eine Vielzahl von literalen Wetternachrichten verschiedener Typen speichert, und die Steuereinheit (80) dazu programmiert ist, die Wetternachrichten auf dem Display (120) sequenziell gemäß ihren Typen in einer vorbestimmten Reihenfolge anzuzeigen.

13. Wetterstation nach Anspruch 12, worin die Steuereinheit dazu programmiert ist, die Wetternachrichten wiederholt und kontinuierlich anzuzeigen, und eine Taste (131) der Betriebsschaltung (90) betriebsbereit ist, um das Display (120) zurückzusetzen, damit es mit einer Wetternachricht einer Warnungskategorie neu startet.

14. Wetterstation nach einem vorhergehenden Anspruch, worin die Steuereinheit (80) dazu programmiert ist, die Wettemachricht oder -nachrichten wiederholt und kontinuierlich auf dem Display (120) anzuzeigen, damit sie jederzeit gelesen werden können.

## Revendications

1. Station météorologique (100) pour mesurer et indiquer des conditions météorologiques, comprenant :
un boîtier (110) ayant un écran d'affichage (120) ; et
un circuit d'exploitation électronique (90) situé dans le boîtier (110) pour l'exploitation, le circuit d'exploitation comprenant :
au moins un capteur (70) pour détecter un paramètre atmosphérique,
une mémoire (60) pour stocker au moins un message météorologique littéral en rapport avec le paramètre atmosphérique, et
une unité de commande (80) pour déterminer le degré du paramètre atmosphérique détecté par le capteur (70) et récupérer un dit message météorologique correspondant au degré, puis afficher le message météorologique sur l'écran d'affichage (120), où le ou chaque message météorologique littéral a un contenu qui indique un phénomène météorologique probable, tel qu'un effet probable sur une personne et/ou une action recommandée à effectuer sur une personne.

2. Station météorologique telle que revendiquée dans la revendication 1, dans laquelle l'unité de commande (80) est adaptée pour afficher le message météorologique sur l'écran d'affichage (120) d'une manière dynamique.

3. Station météorologique telle que revendiquée dans la revendication 2, dans laquelle l'écran d'affichage (120) s'étend horizontalement et l'unité de commande (80) est adaptée pour afficher le message météorologique défilant le long de l'écran d'affichage (120).

4. Station météorologique telle que revendiquée dans l'une quelconque des revendications précédentes, dans laquelle l'écran d'affichage (120) comprend un afficheur à matrice de points (121).

5. Station météorologique telle que revendiquée dans l'une quelconque des revendications précédentes, dans laquelle la mémoire (60) stocke une pluralité de messages météorologiques littéraux correspondant aux variations du paramètre atmosphérique pour un affichage sur l'écran d'affichage (120) sous le contrôle de l'unité de commande (80) selon les variations correspondantes telles que déterminées.

6. Station météorologique telle que revendiquée dans l'une quelconque des revendications précédentes, dans laquelle la mémoire (60) stocke une pluralité de messages météorologiques littéraux de différents types comprenant l'indice humidex, l'indice UV et les prévisions météorologiques.

7. Station météorologique telle que revendiquée dans la revendication 6, dans laquelle les types de messages comprennent des alertes au gel, au givre et au brouillard.

8. Station météorologique telle que revendiquée dans l'une quelconque des revendications précédentes, dans laquelle le paramètre atmosphérique comprend la température exprimée sous la forme de l'indice humidex ayant une série de variations, et la mémoire (60) stocke une pluralité de messages météorologiques littéraux correspondant aux variations, ayant des contenus indiquant des effets probables sur une personne, pour un affichage sur l'écran d'affichage (120) sous le contrôle de l'unité de commande (80) selon les variations correspondantes telles que déterminées.

9. Station météorologique telle que revendiquée dans l'une quelconque des revendications précédentes, dans laquelle le paramètre atmosphérique comprend le rayonnement solaire UV exprimé sous la forme de l'indice UV ayant une série de variations, et la mémoire (60) stocke une pluralité de messages météorologiques littéraux correspondant aux variations, ayant des contenus indiquant des actions recommandées à une personne, pour un affichage sur l'écran d'affichage (120) sous le contrôle de l'unité de commande (80) selon les variations correspondantes telles que déterminées.

10. Station météorologique telle que revendiquée dans l'une quelconque des revendications précédentes, dans laquelle le paramètre atmosphérique comprend la tendance de la pression exprimée comme prévision météorologique ayant une série de variations, et la mémoire (60) stocke une pluralité de messages météorologiques littéraux correspondant aux variations, ayant des contenus indiquant des phénomènes météorologiques probables, pour un affichage sur l'écran d'affichage (120) sous le contrôle de l'unité de commande (80) selon les variations correspondantes telles que déterminées.

11. Station météorologique telle que revendiquée dans l'une quelconque des revendications précédentes, dans laquelle le paramètre atmosphérique comprend la température et l'humidité exprimées sous la forme d'une des alertes au gel, au givre et au brouillard, et la mémoire (60) stocke un message météorologique littéral correspondant, ayant un contenu indiquant une action recommandée à une personne ou un phénomène météorologique probable, pour un affichage sur l'écran d'affichage (120) sous le contrôle de l'unité de commande (80) selon la température et l'humidité telles que déterminées.

12. Station météorologique telle que revendiquée dans l'une quelconque des revendications précédentes, dans laquelle la mémoire (60) stocke une pluralité de messages météorologiques littéraux de différents types, et l'unité de commande (80) est programmée pour afficher les messages météorologiques sur l'écran d'affichage (120) de manière séquentielle selon leurs types dans un ordre prédéterminé.

13. Station météorologique telle que revendiquée dans la revendication 12, dans laquelle l'unité de commande est programmée pour afficher les messages météorologiques de manière répétée et en continu, et une touche (131) du circuit d'exploitation (90) est actionnable pour réinitialiser l'écran d'affichage (120) pour recommencer à partir d'un message météorologique ayant une nature d'avertissement.

14. Station météorologique telle que revendiquée dans l'une quelconque des revendications précédentes, dans laquelle l'unité de commande (80) est programmée pour afficher le ou les messages météorologiques sur l'écran d'affichage (120) de manière répétée et en continu pour une lecture à tout instant.
